# DEMANDE DE BREVET EUROPEEN

(11) **EP 4 454 921 A1**
(43) Date de publication de la demande: **30.10.2024**
(21) Numéro de dépôt: 24167311.0
(22) Date de dépôt: 28.03.2024
(51) Int. Cl.: B60K 11/08, B60R 21/00, B60R 21/34

(54) **CALANDRE DE VÉHICULE AUTOMOBILE À OUVERTURE RÉGLABLE**

(30) Priorité: 07.04.2023 FR 2303500
(71) Demandeur: Renault s.a.s, 92100 Boulogne Billancourt (FR)
(72) Inventeur: DURON, Frederic, 78280 GUYANCOURT (FR); FRILEUX, Stephane, 78280 GUYANCOURT (FR); VERDERA, Damien, 78280 GUYANCOURT (FR)

(57) **Abrégé**

L'invention concerne une calandre comprenant : une traverse supérieure et une traverse inférieure (32) délimitant une ouverture avant prolongée par un chemin de passage d'air ; une pluralité de volets (38) présentant chacun deux bords latéraux opposés et une face avant opposée à une face arrière, chaque volet comprenant un pivot supérieur monté dans la traverse supérieure et à l'opposé un pivot inférieur monté dans la traverse inférieure (32), de façon à maintenir les volets (38) espacés les uns des autres ; des organes d'entraînement (68, 70, 138, 140) desdits volets (38, 41) en pivotement entre une position transversale pour obturer ledit chemin de passage d'air, et une position longitudinale pour libérer ledit chemin de passage d'air. Lesdits pivots supérieur et inférieur sont situés au voisinage de l'un desdits deux bords latéraux dans une position écartée de ladite face arrière, et lesdits pivots sont montés en arrière de ladite ouverture transversale.

## Description

La présente invention se rapporte à une calandre de véhicule automobile permettant de moduler l'entrée d'air.

Les véhicules automobiles à motorisation thermique ou bien électrique requièrent une entrée d'air, à l'avant, de manière à pouvoir refroidir les éléments du groupe motopropulseur lorsqu'il est en fonctionnement.

Ainsi, la calandre, installée dans la face avant des véhicules, comporte usuellement une ouverture d'entrée d'air équipée d'une grille et qui s'étend transversalement. Aussi, les dimensions de l'ouverture sont prédéfinies et elle offre un compromis entre une bonne aération du groupe motopropulseur et un bon coefficient de pénétration dans l'air du véhicule.

Toutefois, lorsque le véhicule automobile évolue à grande vitesse, l'entrée d'air à travers la grille provoque une résistance à l'avancement et il serait alors avantageux d'obturer l'ouverture. Mais lorsque le groupe motopropulseur est relativement chaud, par exemple en montagne, il est nécessaire à l'inverse que l'ouverture soit libre. Aussi, il a été imaginé de mettre en oeuvre des volets mobiles en pivotement en travers de l'ouverture et ainsi, de régler automatiquement les volets dans une position d'obturation de l'ouverture lorsque le véhicule évolue à grande vitesse, ou dans une position dans laquelle ils autorisent le passage de l'air à travers de l'ouverture lorsqu'un besoin de refroidissement du groupe motopropulseur est nécessaire.

On pourra se référer notamment au document WO2013092141, lequel divulgue de tels volets réglables.

Les volets sont ainsi mobiles entre une position dans laquelle ils s'étendent selon un plan parallèle au plan moyen défini par l'ouverture, lorsqu'ils l'obstruent, et une position dans laquelle ils s'en étendent sensiblement perpendiculairement pour la libérer.

Toutefois, les prescriptions de sécurité régissant les saillies extérieures des véhicules et visant à préserver les personnes en cas de collision, imposent certaines règles, et notamment la position relative des arêtes entre les éléments d'une grille.

Ainsi, la position relative du bord des volets dans l'ouverture d'une calandre est visée par ces prescriptions.

Aussi, un problème qui se pose et que vise à résoudre la présente invention est de fournir une calandre de véhicule automobile qui permette de préserver les personnes en cas de collision.

Dans ce but, il est proposé une calandre de véhicule automobile comprenant : une traverse supérieure et une traverse inférieure opposées l'une de l'autre, délimitant une ouverture transversale avant prolongée vers l'arrière par un chemin de passage d'air ; une pluralité de volets présentant chacun deux bords latéraux opposés et une face avant opposée à une face arrière, chaque volet comprenant un pivot supérieur monté à rotation dans la traverse supérieure et à l'opposé un pivot inférieur monté à rotation dans la traverse inférieure, de façon à maintenir les volets espacés les uns des autres entre lesdites traverses ; des organes d'entraînement pour pouvoir entraîner lesdits volets en pivotement entre une position transversale dans laquelle ils sont orientés transversalement bord à bord dans ladite ouverture transversale pour obturer ledit chemin de passage d'air, et une position longitudinale dans laquelle ils sont orientés longitudinalement pour libérer ledit chemin de passage d'air. Et lesdits pivots supérieur et inférieur de chacun desdits volets sont situés au voisinage de l'un desdits deux bords latéraux dans une position écartée de ladite face arrière, et ils sont montés respectivement en arrière de ladite ouverture, pour que lesdits bords latéraux desdits volets viennent s'étendre en arrière de ladite ouverture transversale, lorsque lesdits volets sont dans ladite position longitudinale.

Ainsi, une caractéristique de l'invention réside, d'une part dans la mise en oeuvre de volets dont les deux pivots sont situés au voisinage d'un de leurs bords latéraux et écartés de leur face arrière, et d'autre part dans le montage des pivots en arrière de l'ouverture. De la sorte, lorsque les volets sont entraînés en pivotement de leur position où ils obturent transversalement le chemin de passage d'air, vers la position dans laquelle il la libère, les volets sont corrélativement entraînés vers l'arrière de l'ouverture. Et, le bord situé le plus proche de l'ouverture en est écarté vers l'arrière également. De la sorte, les bords de volets, qui constituent selon l'art antérieur des saillies pouvant occasionner des blessures en cas de choc piéton, sont dans une position rentrée, en arrière de l'ouverture. Il n'y a de la sorte pas de risque que ses bords puissent blesser une personne lors d'un éventuel choc.

Selon une caractéristique de l'invention particulièrement avantageuse, chacun desdits volets comprend en outre une cloison arrière s'étendant parallèlement en regard de ladite face arrière. De la sorte, lorsque les volets pivotent et viennent s'étendre dans leur position longitudinale, la cloison arrière vient alors s'étendre entre la face arrière du volet considéré et la face avant du volet adjacent. Par conséquent, cela se produit également pour tous les volets de la pluralité de volets. En conséquence, les cloisons arrière viennent entraver l'espace qui s'étend entre les faces arrière et les faces avant, pour toutes les paires de volets adjacents et permet ainsi de retenir les éventuels corps indésirables qui seraient projetés contre la calandre lorsque le véhicule est en situation de conduite. Ces corps indésirables sont notamment les pierres et autres granulats rencontrés usuellement sur les chaussées.

Selon une autre caractéristique avantageuse de l'invention, ladite cloison arrière s'étend de ladite face arrière à une distance voisine de la demi-distance entre les pivots respectivement supérieurs et inférieurs de deux volets contigus. De la sorte, lorsque les volets s'étendent dans leur position longitudinale, les cloisons arrière se situent sensiblement à mi-distance entre la face arrière du volet considéré et la face avant du volet adjacent. Comme on l'expliquera plus en détail dans la suite de la description, on veille à ce que cette distance soit inférieure à 30 mm, et de préférence, inférieure ou égale à 25 mm.

Selon encore une autre caractéristique avantageuse de l'invention, l'autre desdits deux bords opposés de chacun desdits volets présente un soyage. Grâce à cette caractéristique, lorsque les volets sont dans leur position transversale d'obturation du chemin de passage d'air, leurs bords respectifs se joignent de manière étanche. En effet, le soyage de l'autre bord des volets offre un décrochement dans lequel, le bord du volet adjacent vient se loger. On expliquera plus en détail dans la suite de la description dans quelle mesure un tel ajustement permet d'obtenir une plus grande étanchéité est également une meilleure finition.

Préférentiellement, la calandre selon invention comprend en outre un volet central monté en position fixe dans une position médiane de ladite ouverture transversale. Un tel volet central permet par exemple d'installer à demeure un capteur et par exemple une caméra. Il permet également de réserver une ouverture permanente nécessaire à l'alimentation en air du moteur, quel que soit l'état de fonctionnement du véhicule. Aussi, et selon un mode de mise en oeuvre de l'invention particulièrement avantageux, ladite pluralité de volets est divisée en deux demi-pluralité de volets symétriques l'une de l'autre par rapport audit volet central. Néanmoins, les volets des deux demi-pluralités sont aptes à être entraînés simultanément en rotation entre les deux positions transversales et longitudinales. En outre, les volets des deux demi-pluralités de volets sont entraînés simultanément en rotation dans deux sens opposés l'un de l'autre comme on l'expliquera plus en détail ci-après.

De plus, chacun desdits volets présentant un bord supérieur opposé à un bord inférieur, le volet comprend en outre avantageusement, deux flasques longeant respectivement lesdits bords supérieur et inférieur et s'étendant perpendiculairement à ladite face arrière, lesdits pivots supérieur et inférieur s'étendant respectivement en saillie desdits flasques à l'opposé l'un de l'autre. Ainsi, les flasques, l'un supérieur longeant ledit bord supérieur, l'autre inférieur longeant ledit bord inférieur, permettent de supporter les pivots lesquels sont sensiblement coaxiaux et définissent une droite sensiblement parallèle à la face arrière du volet, et qui s'étend sensiblement perpendiculairement aux bords supérieur et inférieur.

En outre, les flasques permettent également de canaliser les flux d'air et de préserver les pivots de l'accumulation de particules comme on l'expliquera ci-après.

Selon un mode préféré de mise en oeuvre, lesdits organes d'entraînement comprennent un cadre monté mobile en translation selon une direction avant arrière entre lesdites traverses et une pluralité de biellettes reliant respectivement lesdits volets et ledit cadre pour pouvoir entraîner simultanément lesdits volets vers ladite position longitudinale lorsque ledit cadre est entraîné en translation en arrière de ladite ouverture. Préférentiellement, les biellettes sont montées à rotation sur les flasques à distance des pivots. En outre, les organes d'entraînement comportent avantageusement deux pluralités de biellettes tandis que le cadre présente une partie inférieure opposée à une partie supérieure. Conséquemment, pour chacun des volets, une biellette supérieure relie la partie supérieure du cadre et le flasque supérieur, tandis qu'une biellette inférieure relie la partie inférieure du cadre et le flasque inférieur. Une telle mise en oeuvre permet un meilleur contrôle du pivotement des volets.

Par ailleurs, les biellettes sont avantageusement courbées en arc pour des raisons de compacité que l'on développera dans la description détaillée.

De plus, préférentiellement, les biellettes sont respectivement articulées sur ledit cadre et lesdits flasques, à distance desdits pivots. Les biellettes sont articulées sur les flasques du même côté que celui duquel s'étend le pivot. Par conséquent, aussi bien l'articulation des biellettes que celui des pivots dans les traverses, sont préservés des salissures grâce aux flasques.

Par ailleurs, selon un mode préféré de mise en oeuvre, ledit un desdits deux bords latéraux présente une échancrure, tandis qu'à l'opposé, l'autre desdits deux bords présente une excroissance complémentaire à ladite échancrure. De la sorte, on rend encore plus aisée la protection des personnes en cas de choc comme on l'expliquera ci-après.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
[Fig. 1] est une vue schématique de face d'un véhicule automobile équipé d'une calandre conforme à l'invention ;
[Fig. 2] est une vue schématique de trois quarts avant gauche de l'objet de l'invention ;
[Fig. 3] est une vue schématique de trois quarts arrière d'un élément de l'objet de la [Fig. 2] ;
[Fig. 4] est une vue schématique de trois quarts arrière d'un autre élément de l'objet de la [Fig. 2] ;
[Fig. 5A] est une vue schématique de trois quarts arrière droit d'un élément de détail illustré sur la [Fig. 2] ;
[Fig. 5B] est une vue schématique de trois quarts arrière gauche de l'élément illustré sur la [Fig. 2] ;
[Fig. 6] est une vue schématique partielle de dessus de l'objet de la [Fig. 2] ;
[Fig. 7] est une vue schématique d'un élément de détail de l'objet de la [Fig. 6] et d'un autre élément associé, dans une première position ;
[Fig. 8] est une vue schématique partielle de trois quarts arrière droit de l'objet de la [Fig. 2] ;
[Fig. 9] est une vue schématique de l'élément de l'objet de la [Fig. 7] et de l'autre élément associé, dans une seconde position ;
[Fig. 10] est une vue schématique partielle de face de l'objet de la [Fig. 2] où les éléments sont dans ladite seconde position ; et,
[Fig. 11] est une vue schématique partielle de côté d'un élément tel qu'illustré sur la [Fig. 10].

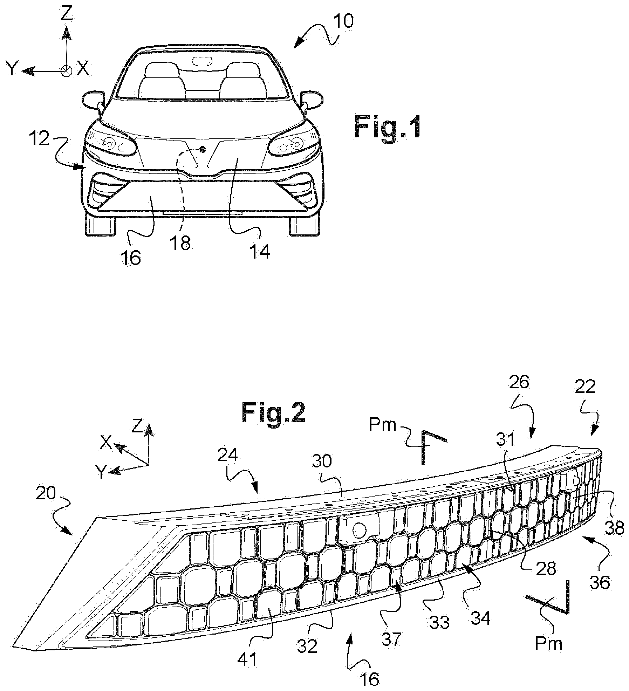

La [Fig. 1] montre un véhicule automobile 10, vu de face, et il s'inscrit dans un repère orthogonal X, Y, Z, dans lequel l'axe X s'étend selon une direction longitudinale avant-arrière du véhicule automobile, orienté vers l'arrière ; l'axe Y s'étend selon une direction transversale du véhicule, orienté de la gauche vers la droite lorsque l'on est en situation de roulage ; et l'axe Z s'étend selon une direction verticale, orienté à l'opposé du sol.

Le véhicule automobile 10 est équipé, sur sa face avant, d'une calandre 12 présentant une partie supérieure 14 et une partie inférieure 16. Aussi, le véhicule 10 comporte un compartiment avant 18 dans lequel est logé un groupe motopropulseur non représenté et situé en arrière de la calandre 12.

Aussi, on décrira en référence à la [Fig. 2], la partie inférieure 16 de la calandre 12, laquelle fait l'objet de l'invention. On observera que la partie supérieure 14 pourrait également faire l'objet de l'invention.

La partie inférieure 16 de la calandre est galbée. Elle s'étend longitudinalement d'une extrémité gauche 20 à une extrémité droite 22. Elle présente une partie gauche 24 symétrique d'une partie droite 26 par rapport à un plan médian Pm.

Aussi, le plan médian Pm coupe la partie inférieure 16 dans une zone médiane 28. On observera que cette zone médiane 28 peut être laissée partiellement libre pour autoriser un passage d'air permanent. En outre, en arrière de cette zone médiane 28 un dispositif d'aide à la conduite peut être installé et/ou une caméra.

La partie inférieure 16 de la calandre présente une traverse supérieure 30 opposée à une traverse inférieure 32. Les traverses 30, 32 présentent respectivement un bord avant supérieure 31 et un bord avant inférieure 33 définissant entre les deux, à l'entrée, une ouverture transversale 34. La traverse supérieure 30 et la traverse inférieure 32 s'étendent sensiblement parallèlement l'une à l'autre et elles sont reliées ensemble à leurs extrémités 20, 22 pour ne former qu'une seule pièce.

L'ouverture 34 est ici obturée par deux demi-pluralités de volets, une demi-pluralité 36 de volets droit 38 et une demi-pluralité 37 de volets gauche 41 opposée par rapport à la zone médiane 28.

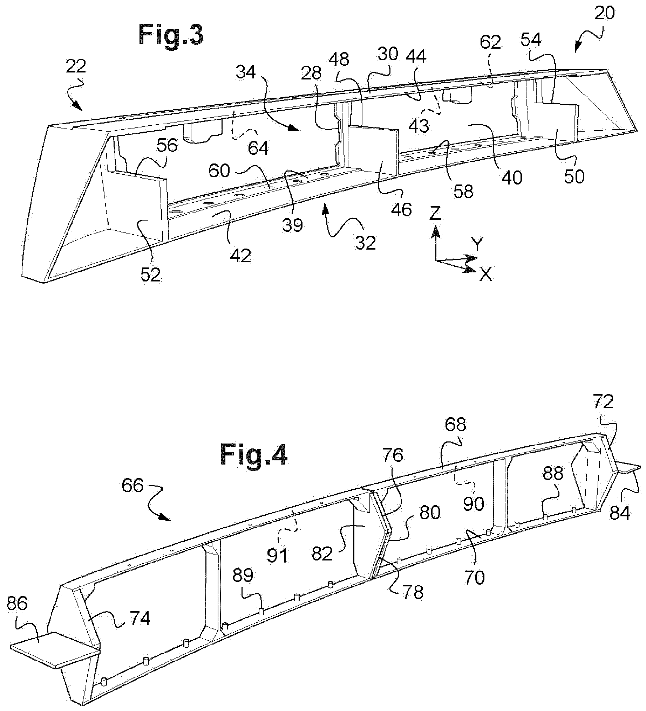

On retrouvera sur la [Fig. 3], vue de trois quarts arrière, les seules traverses supérieure 30 et inférieure 32 reliées entre elles à leurs extrémités 20, 22 et définissant ensemble l'ouverture 34. L'ouverture 34 se prolonge alors par un chemin de passage 40 défini par les traverses 30, 32 et s'étendant vers l'arrière selon la composante +X.

La traverse inférieure 32 présente une bordure avant inférieure 39 prolongée par une bordure arrière inférieure en décrochement 42, tandis qu'à l'opposé et en regard, la traverse supérieure 30 présente une bordure avant supérieure 43 prolongée, elle, par une bordure arrière supérieure en décrochement 44.

On retrouve en outre sur la [Fig. 3], la zone médiane 28 prolongée vers l'arrière, par un panneau médian 46 dressé dans la bordure avant inférieure 39 et dans la bordure arrière 42 en définissant une portée d'appui médiane 48 sensiblement à mi-distance entre la traverse supérieure 30 et la traverse inférieure 32.

Aussi, aux extrémités 20, 22, sont également respectivement dressés dans la bordure inférieure avant 39 et dans la bordure arrière 42, un panneau gauche 50 et un panneau droit 52 symétrique par rapport au panneau médian 46. Ces deux panneaux 50, 52 définissent respectivement une portée d'appui gauche 54 et une portée d'appui droite 56 sensiblement parallèles à la portée d'appui médiane 48 et également à mi-distance entre la traverse supérieure 30 et la traverse inférieure 32.

Les panneaux gauche 50 et droit 52 sont situés en dehors du champ de l'ouverture 34. Autrement dit, ils sont espacés l'un de l'autre d'une distance supérieure à la largeur de l'ouverture 34.

Au surplus, une demi-pluralité d'orifices borgnes inférieurs gauches 58 et une demi-pluralité d'orifices borgnes inférieurs droits 60 sont ménagés dans la bordure inférieure avant 39. Les orifices borgnes inférieurs 58, 60 sont ménagés le long de la bordure arrière 42, et par conséquent en arrière de l'ouverture 34.

Les deux demi-pluralités d'orifices borgnes 58, 60 sont symétriques l'une de l'autre par rapport au panneau médian 46. Et de surcroît, les orifices borgnes des deux demi-pluralités d'orifices borgnes 58, 60 sont régulièrement espacés les uns des autres. Respectivement en regard, dans la bordure avant supérieure 43, une demi-pluralité d'orifices borgnes supérieurs gauches 62 et une demi-pluralité d'orifices borgnes supérieurs droits 64 sont ménagés.

De la même façon, les orifices borgnes supérieurs 62, 64 sont ménagés le long de la bordure avant supérieure 43, et en arrière de l'ouverture 34.

On se reportera à présent sur la [Fig. 4] illustrant un cadre 66 adapté à coopérer avec les deux traverses 30, 32, objet de la [Fig. 3] comme on va l'expliquer ci-après.

Le cadre 66 présente une partie supérieure méplate en arc 68 et une partie inférieure méplate en arc 70 en regard reliées entre elles par un montant d'extrémité gauche 72 et à l'opposé, par un montant d'extrémité droit 74. Un montant médian 76 vient s'étendre à équidistance entre les deux montants d'extrémité 72, 74. Aussi, le montant médian 76 présente une fente 78 divisant le montant en deux demi-parties 80, 82 espacées l'une de l'autre d'une distance sensiblement supérieure à l'épaisseur du panneau médian 46 représenté sur la [Fig. 3].

Par ailleurs, les deux montants d'extrémité 72, 74 sont respectivement munis d'une plaque d'appui gauche 84 et d'une plaque d'appui droite 86 s'étendant à l'opposé l'une de l'autre à équidistance des parties supérieure 68 et inférieure 70 méplates et parallèles à ces parties 68, 70.

En outre, la partie inférieure méplate en arc 70 présente une demi-pluralité de tétons inférieurs gauches 88 et une demi-pluralité de tétons inférieurs droits 89, qui s'étendant en saillie vers la partie supérieure méplate 68 et qui sont régulièrement espacés les uns des autres, de part et d'autre du montant médian 76.

Aussi, la partie supérieure méplate en arc 68 présente de la même façon une demi-pluralité de tétons supérieurs gauches 90 et une demi-pluralité de tétons supérieurs droits 91, s'étendant vers la partie inférieure méplate 70 et au droit respectivement des tétons inférieurs gauches 88 et droits 89.

Par ailleurs, on observera que les tétons 88, 89, 90, 91 sont régulièrement espacés les uns des autres de part et d'autre des deux demi-parties 80, 82, d'une distance correspondant à la distance séparant les orifices borgnes de chacune des demi-pluralité d'orifice borgnes 58, 60, 62, 64 pratiqués dans les traverses 30, 32 représentés sur la [Fig. 3].

De plus, le cadre 66 est destiné à être engagé entre les deux traverses 30, 32 de manière que le panneau médian 46 vienne à coulissement à l'intérieur de la fente 78 du montant médian, tandis que les plaques d'appui gauche 84 et droite 86 viennent respectivement en appui sur les portées d'appui gauche 54 et droite 56 et que les parties méplates inférieure 70, supérieure 68 viennent respectivement en glissement contre les bordures arrière en décrochement inférieure 42 et supérieure 44.

Le cadre 66 est ainsi adapté à être entraîné en translation avant arrière, selon la composante X entre les deux traverses 30, 32 comme on l'expliquera ci-après. Ce mouvement de translation est réalisé par exemple par des vérins, non représentés, et la commande de ces vérins peut être automatisée en fonction de températures enregistrées

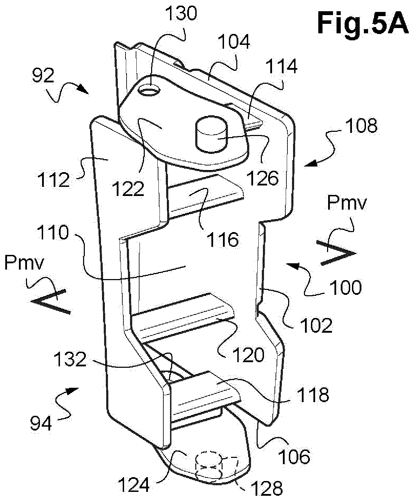

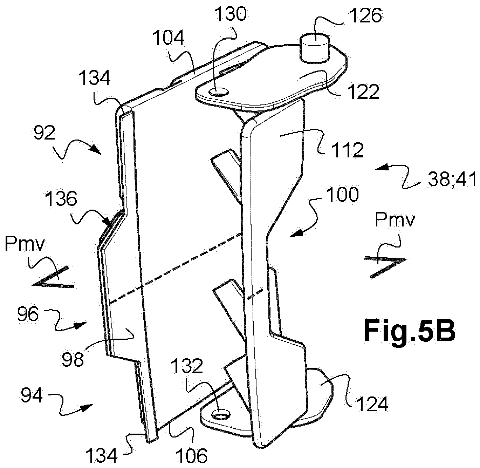

On se reportera à présent sur les [Fig. 5A] et [Fig. 5B] illustrant sous deux angles différents, les volets droits 38 et gauches 41.

Tout d'abord, on observera sur la [Fig. 5B] que le volet 38, 41, présente deux parties de volet, une première partie de volet 92 et une seconde partie de volet 94, symétriques l'une de l'autre par rapport à un plan médian de volet Pmv. De la sorte, et comme on l'expliquera plus en détail dans la suite de la description, les volets 38, 41 sont tous identiques et, la première partie de volet 92 est monté solidaire de la traverse supérieure 30, dans la partie gauche 24 de la partie inférieure 16 de calandre, tandis que la seconde partie de volet 94 est montée solidaire de la traverse inférieure 32, alors que dans la partie droite 26 de la partie inférieure 16 de calandre, la première partie de volet 92 est montée solidaire de la traverse inférieure 32 et la seconde partie de volet 94 est montée solidaire de la traverse supérieure 30.

Chaque volet présente deux bords latéraux opposés, un premier bord 96 présentant une excroissance médiane 98 en forme de languettes, et à l'opposé, un second bord 100 présentant une échancrure médiane 102 dont la forme correspond à celle de l'excroissance médiane 98. L'échancrure médiane 102 apparaît plus clairement sur la [Fig. 5A]. Apparaissent également clairement sur cette [Fig. 5A], un premier bord rectiligne 104 dans la première partie de volet 92 et un second bord rectiligne 106 et parallèle au premier 104, dans la seconde partie de volet 94.

Chaque volet présente également une face avant 108 opposée à une face arrière 110. Aussi, chaque volet comprend une cloison arrière 112, ou aile, s'étendant parallèlement et en regard de la face arrière 105.

La cloison arrière 112 est solidaire de la face arrière 110 du volet grâce à quatre entretoises, deux premières entretoises 114, 116, dans la première partie du volet 92 et deux secondes entretoises 118, 120, dans la seconde partie du volet 94. La cloison arrière 112 s'étend ainsi à une distance voisine de 25 mm par exemple de la face arrière 110.

L'une 114 des deux premières entretoises s'étend de la face arrière 110 au voisinage du premier bord 104, et l'une 118 des deux secondes entretoises s'étend de la face arrière 110 au voisinage du second bord rectiligne 106. Les deux autres entretoises 116, 120 s'étendent parallèlement en regard l'une de l'autre et au droit respectivement de celles 114, 118 situées respectivement au voisinage des premier et second bords 104, 106.

En outre, un premier flasque oblong 122 est relié le long du premier bord rectiligne 104, à la première entretoise 114 située au voisinage du premier bord 104. Le premier flasque oblong 122 s'étend sensiblement perpendiculairement à la face arrière 110 et il définit un plan moyen venant tangenter le premier bord rectiligne 104 et la cloison arrière 112.

À l'opposé, un second flasque oblong 124, symétrique du premier par rapport au plan médian du volet Pmv, est relié le long du second bord rectiligne 106, à la seconde entretoise 118 située au voisinage du second bord rectiligne 106. Aussi, il s'étend sensiblement perpendiculairement à la face arrière 110 et il définit également un plan moyen venant tangenter le second bord rectiligne 106 et la cloison arrière 112.

Aussi, les flasques oblongs 122, 124, à l'une de leurs extrémités, supportent respectivement un premier pivot 126 et un second pivot 128 s'étendant respectivement dans deux sens opposés l'un de l'autre. Le second pivot 128 est ici masqué par le second flasque 124.

Les premier 126 et second 128 pivots, viennent s'étendre au voisinage du second bord 100 comparativement au premier bord opposé 96, et dans une position écartée de la face arrière 110. Toutefois, les pivots 126, 128 sont écartés de la face arrière 110 d'une distance sensiblement inférieure à la distance séparant la cloison arrière 112 de la face arrière 110.

Aussi, les deux pivots 126, 128 définissent un axe de pivotement sensiblement parallèle à la face arrière 110 du volet et également aux lignes moyennes définies par les premier 96 et second 100 bords.

À l'autre extrémité, les flasques oblongs 122, 124 présentent respectivement un premier perçage 130 et un second perçage 132 que l'on retrouve plus clairement sur la [Fig. 5B]. Les premier 130 et second 132 perçages sont dans une position écartée de la face arrière 110 et sensiblement à équidistance des deux bords latéraux 96, 100. En outre, on observera que le premier bord latéral 96 présente un soyage 134, lequel définit une feuillure 136, du premier bord 104 jusqu'au second bord 106. On expliquera ci-après le rôle des soyages 134.

Ainsi, on installe les volets droits 38 entre le panneau droit 52 et le panneau médian 46 illustré sur la [Fig. 3], en engageant les seconds pivots 128 des volets illustrés sur les [Fig. 5A] et [Fig. 5B] dans les orifices borgnes supérieurs droits 64 et les premiers pivots 126 dans les orifice borgnes inférieurs droits 60. Les pivots 126, 128 sont adaptés à être guidés en rotation dans les orifices correspondants.

On observera que dans cette position, les premiers bords latéraux 96 des volets sont orientés vers la zone médiane 28 illustrée sur la [Fig. 3].

En outre, on installe les volets gauches 41 entre le panneau gauche 50 et le panneau médian 46 en engageant les premiers pivots 126 des volets dans les orifices borgnes supérieurs gauches 62 et les seconds pivots 128 dans les orifices borgnes inférieurs gauches 58.

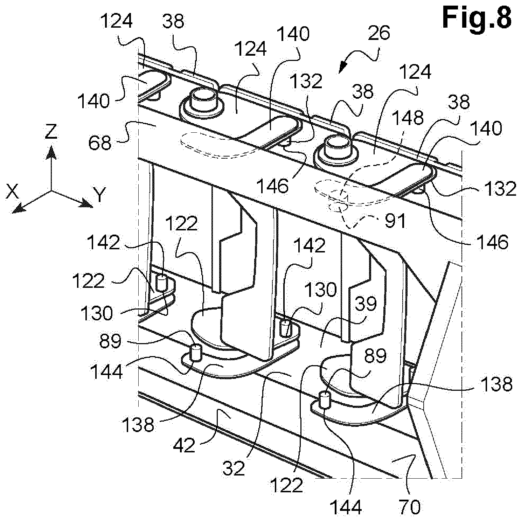

Aussi, chacun des flasques oblongs 122, 124 de tous les volets sont reliés aux parties supérieure 68 et inférieure 70 méplates en arc 68 du cadre 66 engagé entre les traverses supérieure 30 et inférieure 32, par l'intermédiaire de biellettes en arc. Ainsi, la [Fig. 8] montre en vue arrière droite et partiellement, la partie droite 26 de la partie inférieure de la calandre 16.

On retrouve ainsi la traverse inférieure 32, tandis que la traverse supérieure 30 n'a pas été représentée pour la clarté de la description. Trois volets droits 38 sont dressés sur la traverse inférieure 32, tandis que leur premier pivot 126, engagé dans les orifices borgnes inférieurs droits 60, sont masqués par leur premier flasque oblong 122.

Aussi, la partie inférieure méplate en arc 70 du cadre 66 est en appui contre la bordure arrière inférieure en décrochement 42.

En outre, le premier flasque oblong 122 de chacun des volets 38 est relié à la partie inférieure méplate en arc 70 par l'intermédiaire d'une biellette en arc droite 138, tandis que le second flasque oblong 124 est relié à la partie supérieure méplate en arc 68 par l'intermédiaire d'une biellette en arc gauche 140.

Les biellettes en arc droites 138 présentent une première extrémité munie d'un premier tourillon 142 engagé dans le premier perçage 130 des premiers flasques 122. Elles présentent une seconde extrémité opposée à la première, dans laquelle est pratiqué un premier orifice traversant 144. Et les tétons inférieurs droits 89 sont respectivement engagés à rotation à travers les orifices traversant 144.

On observera que les biellettes en arc droites 138 sont engagées entre les premiers flasques 122 et la traverse inférieure 32. De la sorte, les premiers flasques 122 viennent recouvrir l'articulation des biellettes 138 et les préservent ainsi des salissures comme on va l'expliquer ci-après.

Par ailleurs, la forme en arc des biellettes 138 permet de compacter l'ensemble traverses 30, 32, volets 38 et cadre 66 dans la direction axiale selon l'axe X.

À l'opposé, les biellettes en arc gauches 140 présentent une première extrémité munie d'un second tourillon 146 engagé dans le second perçage 132 des seconds flasques 124. Elles présentent une seconde extrémité opposée à la première, et masqué par la partie supérieure méplate en arc 68, dans laquelle est pratiqué un second orifice traversant 148. Et les tétons supérieurs droits 91 sont respectivement engagés à rotation à travers les seconds orifices traversant 148.

De manière analogue, les biellettes en arc gauches 140 sont engagées entre les seconds flasques 124 et la traverse supérieure, non représentée sur la [Fig. 8]. De la sorte, les seconds flasques 124 recouvrent l'articulation des biellettes 140 et les préservent des salissures.

À l'opposé, s'agissant de la partie gauche 24 de la partie inférieure de la calandre 16, les volets gauche 41, identiques aux volets droit 38, sont dressés sur la traverse inférieure 32 selon une orientation inverse. En effet, c'est leur second pivot 128 qui est engagé dans les orifices borgnes gauche inférieurs 58, tandis que leur premier pivot 126 est lui, engagé dans les orifices borgnes gauches supérieurs 62.

Aussi, le premier flasque oblong 122 de chacun des volets droit 41 est relié à la partie supérieure méplate en arc 68 par l'intermédiaire d'une biellette en arc gauche 140, tandis que le second flasque oblong 124 est relié à la partie inférieure méplate en arc 70 par l'intermédiaire d'une biellette en arc droite 138.

Partant, le mouvement relatif en translation du cadre 66 et des traverses supérieure 30 et inférieure 32 provoque la rotation des volets gauches 41 de manière analogue à celle des volets droits 38, mais dans un sens inverse.

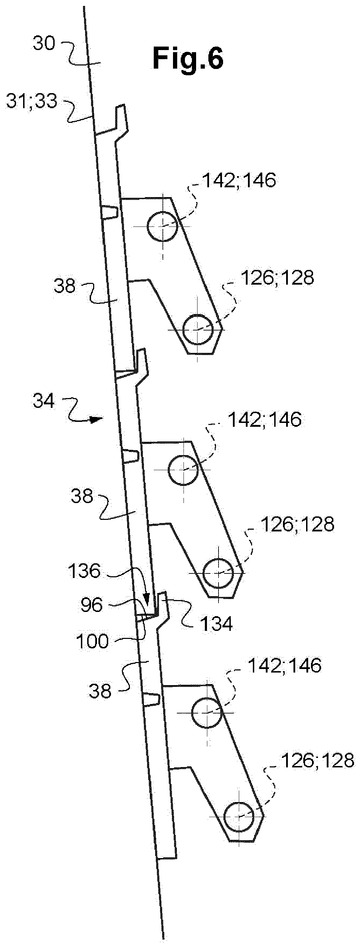

Sur la [Fig. 8], le cadre 66 et ses deux parties méplates en arc 68, 70 sont dans une position rapprochée des volets 38 et de la bordure avant inférieure 39 tout comme de la bordure avant supérieure 43 non représentée ici. Et dans cette position relative du cadre 66 et des traverses, les volets 38 viennent s'étendre bord à bord dans l'ouverture 34 et au droit des bords avant 31, 33, comme illustré sur la [Fig. 6] à laquelle on se reportera.

On y retrouve ainsi les trois volets 38 maintenus, premier bord latéral 96 contre second bord latéral opposé 100. Plus précisément, on observera que le second bord latéral 100 vient s'engager dans la feuillure 136 définie par le soyage 134. De la sorte, on obtient une meilleure étanchéité à l'air, entre les volets contigus 38.

Et les volets 38 sont maintenus dans cette position, premier bord latéral 96 contre second bord latéral 100 par l'intermédiaire des pivots 126, 128 et des tourillons 142, 146.

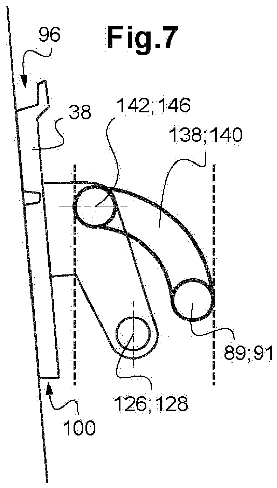

Un seul volet 38 est représenté sur la [Fig. 7] et il est montré avec ses biellettes en arc 138, 140. Dans cette position, où le volet 38 contribue à obturer l'ouverture 34 de la partie inférieure de calandre 16, les biellettes 138, 140 et les flasques 122, 124 non représentés ici, sont repliés l'un vers l'autre.

Aussi, on comprend en regard de la [Fig. 8], que l'entraînement en translation du cadre 66 vers l'arrière selon la composante +X du repère, tandis que les traverses 30, 32 demeurent en position fixe, provoque simultanément l'entraînement des biellettes 138, 140 de tous les volets 38. Partant, le mouvement des biellettes 138, 140 provoquent l'entraînement en rotation des flasques 122, 124 autour des pivots respectifs 126, 128. En conséquence, les volets 38 pivotent de sorte que le premier bord latéral 96 est entraîné en premier lieu entre les traverses 30, 32 vers l'arrière selon la composante +X.

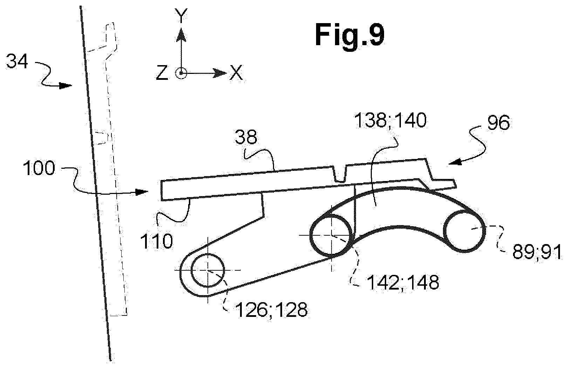

En bout de course, comme illustré sur la [Fig. 9], les pivots 126, 128, les tourillons 142, 146 et les tétons 89, 91 sont respectivement sensiblement alignés, tandis que le volet 38 est dans une position où il est orienté sensiblement orthogonalement à sa position initiale. Et c'est bien évidemment le cas de tous les volets 38, 41 qui libèrent alors l'ouverture 34. L'air peut alors circuler librement à travers l'ouverture 34 et être guidé dans le chemin de passage 40 grâce aux volets 38, 41.

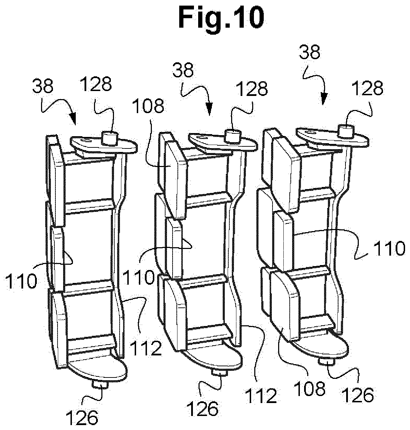

On observera alors que le premier bord latéral 96 du volet 38 vient s'étendre alors vers l'arrière sensiblement au droit de la bordure arrière 42 et aussi, que le second bord latéral opposé 100, vient lui, s'étendre en arrière de l'ouverture 34. Un tel retrait du second bord latéral 100 est lié à la position relative des pivots 126, 128 par rapport à la face arrière 110 du volet 38 et aussi par rapport à ce second bord latéral 100. On se référera à présent à la [Fig. 10], sur laquelle on retrouve les trois seuls volets droits 38 tels qu'illustrés sur la [Fig. 8], après qu'ils ont été entraînés en pivotement dans une position de libération de l'ouverture. Ils sont représentés seuls pour la clarté de l'explication, mais dans la position qu'ils auraient et les distances qui les séparent les uns des autres après avoir été entraînés entre les deux traverses 30, 32. Bien évidemment, tous les autres volets 38, 41 sont orientés simultanément de la même façon.

On comprend alors que les cloisons arrière 112 viennent s'interposer entre la face arrière 110 du volet à laquelle elle est rattachée et la face avant 108 d'un volet contigu. Les cloisons arrière 112, ou ailes, des volets 138 viennent ainsi s'étendre sensiblement parallèlement et à équidistance des faces arrière 100 et des faces avant 108.

Aussi, les volets droits 38, tout comme les volets gauches 41, sont espacés les uns des autres d'une distance voisine de 50 mm, de second pivot 128 à second pivot 128, ou de premier pivot 126 à premier pivot 126. De plus, les cloisons arrière 112 sont espacées des faces arrière 110 des volets d'une distance voisine de 25 mm. Et en conséquence, les cloisons arrière 112 sont espacées du volet contigu d'une distance sensiblement inférieure à 25 mm, par exemple 23 mm.

De la sorte, les volets 38, 41 forment dans cette position, une grille d'entrée d'air interdisant la pénétration des éléments d'un diamètre supérieur à 26 mm, et en particulier les pierres et autres gravillons. De plus, dans la phase de rotation des volets 38, 41 entre la position d'obturation de l'ouverture 34 et la position de libération de l'ouverture, aucun espace supérieur à 25 mm ne se créer.

En conséquence, la fonction normée, pare-pierre, est opérante.

On observera que les volets peuvent théoriquement être maintenus en position fixe dans une infinité d'orientation entre leurs deux positions extrêmes sensiblement perpendiculaires.

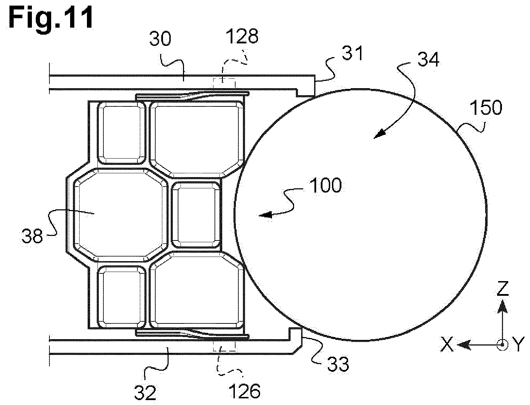

De plus, comme on l'expliquera en regard de la [Fig. 11], la calandre selon l'invention permet de respecter l'intégrité physique des personnes en cas de choc conformément aux normes en vigueur.

Ainsi on retrouve sur la [Fig. 11], un volet droit 38 dans une position de libération de l'ouverture 34, conformément à la position qu'il a sur la [Fig. 10]. On retrouve également le bord avant supérieure 31 de la traverse supérieure 30 et le bord avant inférieure 33 de la traverse inférieure 32. De plus, on retrouve le second bord échancré 100 du volet 38 lequel est en retrait par rapport à l'ouverture 34 délimitée par les deux bords avant 31, 33.

Aussi, l'écartement entre la traverse supérieure 30 et la traverse inférieure 32, ainsi que la position relative des pivots 126, 128 par rapport au second bord échancré 100 et la distance entre chacun des orifice borgnes 58, 60, 62, 64 et les bords avant respectivement 31, 33, sont choisis de manière que la boule normative 150 d'un rayon de 100 mm ne puisse atteindre le second bord échancré 100 du volet 38 lorsqu'elle vient en appui contre les deux bords avant 31, 33.

Autrement dit, le second bord échancré 100 des volets est suffisamment en retrait de la face avant de la calandre lorsque l'ouverture 34 est libérée pour ne pas blesser les personnes en cas de choc frontal.

## Revendications

1. Calandre de véhicule automobile comprenant :
- une traverse supérieure (30) et une traverse inférieure (32) opposées l'une de l'autre, délimitant une ouverture transversale avant (34) prolongée vers l'arrière par un chemin de passage d'air (40) ;
- une pluralité de volets (38, 41) présentant chacun deux bords latéraux opposés (96, 100) et une face avant (108) opposée à une face arrière (110), chaque volet comprenant un pivot supérieur (126, 128) monté à rotation dans la traverse supérieure (30) et à l'opposé un pivot inférieur (128, 126) monté à rotation dans la traverse inférieure (32), de façon à maintenir les volets (38, 41) espacés les uns des autres entre lesdites traverses ;
- des organes d'entraînement (66, 138, 140) pour pouvoir entraîner lesdits volets (38, 41) en pivotement entre une position transversale dans laquelle ils sont orientés transversalement bord à bord dans ladite ouverture transversale (34) pour obturer ledit chemin de passage d'air (40), et une position longitudinale dans laquelle ils sont orientés longitudinalement pour libérer ledit chemin de passage d'air ;
**caractérisée en ce que** lesdits pivots supérieur et inférieur (126, 128) de chacun desdits volets (38, 41) sont situés au voisinage de l'un (100) desdits deux bords latéraux dans une position écartée de ladite face arrière (110),
et **en ce que** lesdits pivots (126, 128) sont montés respectivement en arrière de ladite ouverture transversale (34), pour que lesdits bords latéraux (100) desdits volets viennent s'étendre en arrière de ladite ouverture transversale (34), lorsque lesdits volets (38, 41) sont dans ladite position longitudinale.

2. Calandre selon la revendication 1, **caractérisée en ce que** chacun desdits volets (38, 41) comprend en outre une cloison arrière (112) s'étendant parallèlement en regard de ladite face arrière (110).

3. Calandre selon la revendication 2, **caractérisée en ce que** ladite cloison arrière (112) s'étend de ladite face arrière (110) à une distance voisine de la demi-distance entre les pivots (126, 128) respectivement supérieurs et inférieurs de deux volets contigus.

4. Calandre selon l'une quelconque des revendications 1 à 3, **caractérisée en ce que** l'autre (96) desdits deux bords opposés de chacun desdits volets présente un soyage (134).

5. Calandre selon l'une quelconque des revendications 1 à 4, **caractérisée en ce qu'**elle comprend en outre un volet central monté en position fixe dans une position médiane (28) de ladite ouverture transversale (34).

6. Calandre selon la revendication 5, **caractérisée en ce que** ladite pluralité de volets (38, 41) est divisée en deux demi-pluralité de volets (36, 37) symétriques l'une de l'autre par rapport audit volet central.

7. Calandre selon l'une quelconque des revendications 1 à 6, **caractérisée en ce que** chacun desdits volets (38, 41) présente un bord supérieur (104, 106) opposé à un bord inférieur (106, 104), et **en ce qu'**il comprend en outre deux flasques (122, 124) longeant respectivement lesdits bords supérieur et inférieur et s'étendant perpendiculairement à ladite face arrière (110), lesdits pivots supérieur et inférieur (126, 128) s'étendant respectivement en saillie desdits flasques à l'opposé l'un de l'autre.

8. Calandre selon l'une quelconque des revendications 1 à 7, **caractérisée en ce que** lesdits organes d'entraînement comprennent un cadre (66) monté mobile en translation selon une direction avant arrière entre lesdites traverses (30, 32) et une pluralité de biellettes (138, 140) reliant respectivement lesdits volets et ledit cadre pour pouvoir entraîner simultanément lesdits volets (38, 41) vers ladite position longitudinale lorsque ledit cadre est entraîné en translation en arrière de ladite ouverture (34).

9. Calandre selon la revendication 7 et 8, **caractérisée en ce que** les biellettes (138, 140) sont respectivement articulées sur ledit cadre (66) et lesdits flasques (122, 124), à distance desdits pivots.

10. Calandre selon l'une quelconque des revendications 1 à 9, **caractérisée en ce que** ledit un (100) desdits deux bords latéraux présente une échancrure (102), tandis qu'à l'opposé, l'autre desdits deux bords présente une excroissance complémentaire (98) à ladite échancrure.
